# EUROPEAN PATENT SPECIFICATION

(11) **EP 2 246 609 B1**
(45) Date of publication and mention of the grant of the patent: **05.06.2013**
(21) Application number: 09005823.1
(22) Date of filing: 27.04.2009
(51) Int. Cl.: F16L 55/115

(54) **System for sealing an access port of a pressurised container or conduit**
System für den abdichtenden Verschluss einer Öffnung eines unter Druck stehenden Behälters oder Leitung
Système d'obturation étanche pour l'orifice d'un réservoir ou conduit pressurisé

(43) Date of publication of application: 03.11.2010
(73) Proprietor: Vector International Limited, Port Talbot Wales SA12 7DJ (GB)
(72) Inventor: Stobbart, John, Port Talbot SA12 7DJ (GB)
(74) Representative: Davies, Gregory Mark

(56) References cited:
- FR-A- 908 602
- GB-A- 771 261
- US-A- 1 645 046
- US-A- 6 129 359

## Description

The present invention relates to a cap for sealing a port of a pressurised container or conduit, in particular for sealing a port of a pressured vessel.

In a wide variety of applications of pressurised containers or conduits, it is necessary to have a port through which material may be added or removed from the container or conduit as required. It will be appreciated that in a pressurised container or conduit, any closing system to a port must be have high seal integrity in order that the pressure within the container may be withstood without leakage occurring. Traditionally this has been achieved through welding a cap onto the opening of the port, the cap being subsequently removed by cutting and a new cap welded about the opening. US 1645046 a washout plus for locomotive boilers. There is described a valve 11 arranged to seat into a valve seat 10. A cap 12 forces the valve against the valve seat in order to provide a seal.

The present invention provides an improved arrangement.

According to the present invention there is system for sealing an access port of a container or conduit as defined in claim 1.

There are numerous benefits associated with the present invention, such as ease of sealing a port, re-sealing ability, consistent performance and reduced chance of ingress of foreign particles through cutting off a cap.

The cap and clamp are preferably separate components.

In one embodiment, the access port assembly may be integral with a pressure vessel, however, it is envisaged that the assembly may be welded to the container and/or conduit.

The sealing surface portion of the access port assembly is preferably tapered. Even more preferably, the tapered sealing surface portion of the access port assembly is frusto-conical. The sealing surface portion of the cap is preferably tapered, and is even more preferably frusto-conical.

The access port assembly preferably comprises a neck having an outer surface, a shoulder portion, and the sealing surface portion, wherein at least part of the cap is arranged to nest in the access port assembly. The neck preferably includes securing means for enabling the clamping means to releasably connect thereto.

The securing means may comprise a thread onto which a corresponding thread of the clamping means locates.

The clamping means is arranged to releasably provide a force axially onto the cap. The clamping means includes a shoulder portion arranged to provide a force onto a corresponding shoulder portion on the cap assembly.

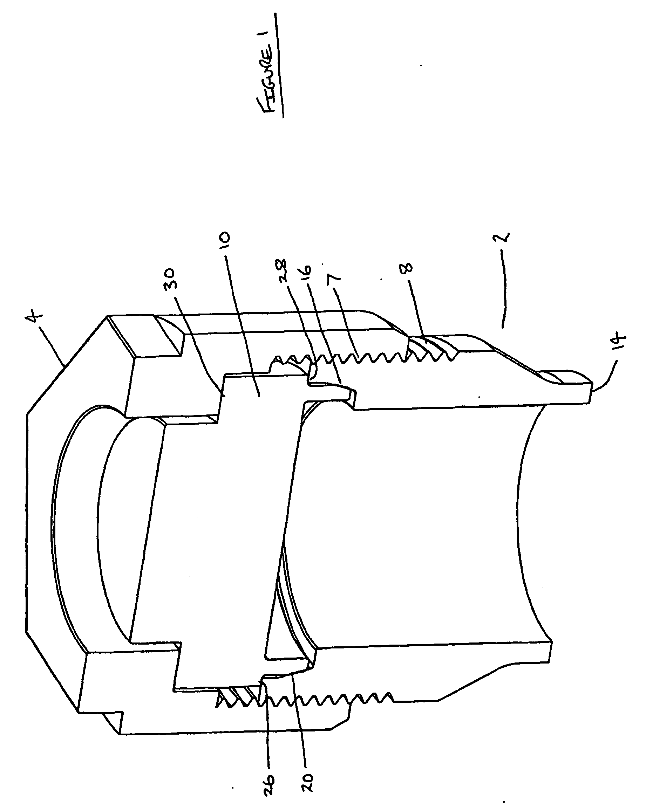

The present invention will now be described by way of example only with reference to the accompanying drawing. Figure 1 is a schematic perspective view of an arrangement according to an exemplary embodiment of the present invention, wherein the arrangement has been cut longitudinally to clearly identify the relevant components.

Referring to Figure 1, there is provided an access port assembly 2 and a clamping arrangement 4. The clamping arrangement 4 may comprise an inner threaded portion 7 which mates onto a corresponding threaded portion 8 of the access port assembly 2. The clamping arrangement 4 may be configured to be rotated through known tooling such as a spanner and accordingly may have a plurality of planer faces thereby enabling engagement with a spanner. It will be appreciated that six planer faces have been indicated in the drawings, however, any suitable number may be utilised.

The access port assembly 2 comprises a rim 14 which can be welded onto the opening in the vessel or conduit to be pressurized. In an alternative embodiment the access port assembly 2 may be formed integrally with the pressurised container or conduit.

The access port assembly comprises a sealing surface 16 against which the seal is formed with the cap 10. The sealing surface 16 is tapered and is beneficially frusto-conical and decreases in diameter in the direction into the container or conduit when the assembly is in use. The outer surface of the access port assembly 2 comprises of a threaded portion arranged to mate with the clamping portion 4.

The cap 10 is indicated which is arranged to co-act with the access port assembly 2 to provide a seal. The cap 10 comprises a sealing surface 20 which communicates with the sealing surface 16 of the access port assembly 2. The sealing surface 20 is preferably tapered and preferably comprises of frustro-conical configuration. The angle of the taper from the vertical orientation may generally correspond to the angle of the sealing surface 16 of the access port assembly 2. Even more beneficially, the angle of the sealing surface 20 is less than the angle of the sealing surface 16 of the access port assembly 2. Examples of suitable angles may be 15 degrees from the vertical (axial length) for the access port assembly 2 and the angle of the sealing surface 20 of the cap 10 may be 13.6 degrees from the vertical (axial length). A minor difference in angles enables an improved seal to be achieved. Once the cap 10 is nested into the access port assembly 2, the sealing surfaces 16 and 20 cooperate to form a seal therebetween. Optionally, the surfaces may have a coating thereon, for example, to act as a lubricant. The cap 10 advantageously comprises a shoulder 26 which in normal use will not come into contact with the upper rim 28 of the access port assembly 2. This shoulder 26 is present such that in the event of excess torque being applied to the clamping arrangement 4 then excess deformation of the portion of the cap 10 comprising the sealing surface 20 will not occur as the shoulder 26 contacts the access port assembly 2 preventing further deformation. A further shoulder 30 is provided on the opposing surface of the cap 10 which is arranged to communicate with the clamping arrangement 4 to compress the cap 10 into the access port assembly 2. The communication of the clamping arrangement 4 with the cap 10 causes the mating of the sealing surfaces 16 and 20 and thus provides the seal.

The clamping arrangement 4 has been shown in an exemplary embodiment including an internal thread which mates with the corresponding thread 32 on the outer surface of the access port assembly 2. It will be appreciated by a person skilled in the art that numerous clamping arrangements may be provided in order to provide the axial force onto the cap 10. It will be appreciated that when the clamping arrangement 4 is tightened, the specific torque must be adhered to to provide the optimum sealing performance.

A coating may be provided on the scals and any other aspects of the components. Providing a lubricant seal on the tapered portions ensures that the best possible seal is achieved and enables the clamping means to be released and the cap removed a number of times as required. Preferred materials for production of the cap and access port assembly is stainless steel is utilised which exhibits good properties for the purpose. The cap may be made of a different metallic material and in one embodiment may be made of a sacrificial material that can be replaced as and when required.

Benefits of the present invention are significant as the cap 10 includes a seal which interacts with the access port assembly 2. Such a component is relatively small and are less costly to manufacture and may optionally be re-machined if damage occurs in use. In use currently whereby caps are welded onto the rim of the aperture and then cut when access is required, there is a high chance of ingress into the container or conduit of foreign matter and as such the present invention overcomes such problems. It should be noted that the examples of specific applications may be reactor tubes or heat exchanger tubes. A further advantage over the provision of a clamping arrangement, cap and seal is that the seal and cap are combined thereby removing a leakage flow path.

The present invention has been described by way of example only and it will be appreciated by a person skilled in the art that modifications and variations may be made to the invention without departing from the scope of protections afforded by the appended claims.

## Claims

1. A system for sealing an access port of a container or conduit, the container or conduit arranged to withstand an above atmosphere pressure environment, the system comprising an access port assembly 2 having a sealing surface portion including a sealing surface 16 arranged to be mated with a cap 10, wherein the access port assembly 2 and the cap 10 are constructed of a metallic material, the cap having integral therewith a deformable sealing surface portion including a sealing surface 20 arranged to nest into the sealing surface portion of the access port assembly 2 such that the sealing surface 20 of the cap and the sealing surface 16 of the access port assembly contact, the system further including a clamping means 4 arranged and configured to cause the sealing surface 20 of the cap to be pushed against the sealing surface 16 of the access port assembly to provide a seal therebetween; **characterised in that** the deformable sealing surface portion of the cap comprises an annular rim defining a recess in the cap, the sealing surface 20 of the cap 10 being provided on a radially outward surface of the annular rim.

2. A system according to claim 1 wherein the angle defined between the cap sealing surface portion and the axial length of the access port assembly 2 is less than the angle defined between the sealing surface portion of the access port assembly and the axial length of the assembly.

3. A system according to claim 1, wherein the cap 10 and clamping means 4 are separate components.

4. A system according to any preceding claim, wherein the access port assembly 2 is integral with a pressure vessel.

5. A system according to any preceding claim, wherein the sealing surface portion of the access port assembly 2 is tapered.

6. A system according to claim 5, wherein the tapered sealing surface portion of the access port assembly is frusto-conical.

7. A system according to any preceding claim, wherein the sealing surface portion of the cap 10 is tapered.

8. A system according to claim 7, wherein the tapered sealing surface portion is frusto-conical.

9. A system according to any preceding claim, wherein the access port assembly 2 comprises a neck having an outer surface, a shoulder portion, and the sealing surface portion, wherein at least part of the cap is arranged to nest in the access port assembly 2.

10. A system according to claim 9, wherein the neck includes securing means for enabling the clamping means 4 to releasably connect thereto.

11. A system according to claim 10, wherein the securing means comprises a thread onto which a corresponding thread of the clamping means locates.

12. A system according to any preceding claim, wherein the clamping means 4 is arranged to releasably provide a force axially onto the cap.

## Patentansprüche

1. System zum Abdichten einer Zugangsöffnung eines Behälters oder einer Leitung, wobei der Behälter oder die Leitung so angeordnet sind, dass sie einer Umgebung mit einem Druck, der über dem Atmosphärendruck liegt, widerstehen können, wobei das System eine Zugangsöffnungsanordnung 2 mit einem Dichtflächenabschnitt mit einer Dichtfläche 16 umfasst, die so angeordnet ist, dass sie mit einer Kappe 10 zusammenpasst, wobei die Zugangsöffnungsanordnung 2 und die Kappe 10 aus einem metallischen Material hergestellt sind und die Kappe einen damit integralen deformierbaren Dichtflächenabschnitt mit einer Dichtfläche 20 hat, die so angeordnet ist, dass sie in den Dichtflächenabschnitt der Zugangsöffnungsanordnung 2 eingeschachtelt ist, so dass sich die Dichtfläche 20 der Kappe und die Dichtfläche 16 der Zugangsöffnungsanordnung kontaktieren, wobei das System ferner ein Klemmmittel 4 aufweist, das so angeordnet und konfiguriert ist, dass veranlasst wird, dass die Dichtfläche 20 der Kappe gegen die Dichtfläche 16 der Zugangsöffnungsanordnung gedrückt wird, um für eine Abdichtung dazwischen zu sorgen, **dadurch gekennzeichnet, dass** der deformierbare Dichtflächenabschnitt der Kappe einen ringförmigen Rand umfasst, der eine Aussparung in der Kappe definiert, wobei die Dichtfläche 20 der Kappe 10 an einer radial äußeren Fläche des ringförmigen Rands vorgesehen ist.

2. System nach Anspruch 1, wobei der zwischen dem Kappendichtflächenabschnitt und der axialen Länge der Zugangsöffnungsanordnung 2 definierte Winkel kleiner als der zwischen dem Dichtflächenabschnitt der Zugangsöffnungsanordnung und der axialen Länge der Anordnung definierte Winkel ist.

3. System nach Anspruch 1, wobei die Kappe 10 und das Klemmmittel 4 separate Komponenten sind.

4. System nach einem der vorhergehenden Ansprüche, wobei die Zugangsöffnungsanordnung 2 mit einem Druckgefäß integral ist.

5. System nach einem der vorhergehenden Ansprüche, wobei der Dichtflächenabschnitt der Zugangsöffnungsanordnung 2 konisch zuläuft.

6. System nach Anspruch 5, wobei der konisch zulaufende Dichtflächenabschnitt der Zugangsöffnungsanordnung kegelstumpfförmig ist.

7. System nach einem der vorhergehenden Ansprüche, wobei der Dichtflächenabschnitt der Kappe 10 konisch zuläuft.

8. System nach Anspruch 7, wobei der konisch zulaufende Dichtflächenabschnitt kegelstumpfförmig ist.

9. System nach einem der vorhergehenden Ansprüche, wobei die Zugangsöffnungsanordnung 2 einen Hals mit einer Außenfläche, einem Schulterabschnitt und den Dichtflächenabschnitt umfasst, wobei mindestens ein Teil der Kappe so angeordnet ist, dass er in der Zugangsöffnungsanordnung 2 verschachtelt ist.

10. System nach Anspruch 9, wobei der Hals ein Befestigungsmittel aufweist, damit das Klemmmittel 4 freigebbar damit verbunden werden kann.

11. System nach Anspruch 10, wobei das Befestigungsmittel ein Gewinde umfasst, auf das ein entsprechendes Gewinde des Klemmmittels aufzuschrauben ist.

12. System nach einem der vorhergehenden Ansprüche, wobei das Klemmmittel 4 so angeordnet ist, dass es eine Kraft axial auf die Kappe freigebbar bereitstellt.

## Revendications

1. Système d'obturation étanche d'un orifice d'accès d'un réservoir ou d'un conduit, le réservoir ou le conduit étant prévu pour résister à un environnement de pression supérieure à la pression atmosphérique, le système comprenant un ensemble 2 d'orifice d'accès ayant une portion de surface d'étanchéité comportant une surface d'étanchéité 16 prévue pour s'accoupler avec un capuchon 10, l'ensemble 2 d'orifice d'accès et le capuchon 10 étant fabriqués en un matériau métallique, le capuchon comprenant une portion de surface d'étanchéité déformable intégrée à celui-ci, comportant une surface d'étanchéité 20 prévue pour s'emboîter dans la portion de surface d'étanchéité de l'ensemble 2 d'orifice d'accès de telle sorte que la surface d'étanchéité 20 du capuchon et la surface d'étanchéité 16 de l'ensemble d'orifice d'accès soient en contact l'une avec l'autre, le système comportant en outre un moyen de serrage 4 prévu et configuré pour pousser la surface d'étanchéité 20 du capuchon contre la surface d'étanchéité 16 de l'ensemble d'orifice d'accès à fin de réaliser un joint étanche entre elles ; **caractérisé en ce que** la portion de surface d'étanchéité déformable du capuchon comprend un bord annulaire définissant un retrait dans le capuchon, la surface d'étanchéité 20 du capuchon 10 étant prévue sur une surface radialement extérieure du bord annulaire.

2. Système selon la revendication 1, dans lequel l'angle défini entre la portion de surface d'étanchéité du capuchon et la longueur axiale de l'ensemble 2 d'orifice d'accès est inférieur à l'angle défini entre la portion de surface d'étanchéité de l'ensemble d'orifice d'accès et la longueur axiale de l'ensemble.

3. Système selon la revendication 1, dans lequel le capuchon 10 et le moyen de serrage 4 sont des composants séparés.

4. Système selon l'une quelconque des revendications précédentes, dans lequel l'ensemble 2 d'orifice d'accès est intégré un récipient sous pression.

5. Système selon l'une quelconque des revendications précédentes, dans lequel la portion de surface d'étanchéité de l'ensemble 2 d'orifice d'accès est effilée.

6. Système selon la revendication 5, dans lequel la portion de surface d'étanchéité effilée de l'ensemble d'orifice d'accès est tronconique.

7. Système selon l'une quelconque des revendications précédentes, dans lequel la portion de surface d'étanchéité du capuchon 10 est effilée.

8. Système selon la revendication 7, dans lequel la portion de surface d'étanchéité effilée est tronconique.

9. Système selon l'une quelconque des revendications précédentes, dans lequel l'ensemble 2 d'orifice d'accès comprend un col ayant une surface extérieure, une portion d'épaulement, et la portion de surface d'étanchéité, au moins une partie du capuchon étant agencée de manière à s'emboîter dans l'ensemble 2 d'orifice d'accès.

10. Système selon la revendication 9, dans lequel le col comporte un moyen de fixation pour permettre au moyen de serrage 4 de se raccorder à celui-ci de manière détachable.

11. Système selon la revendication 10, dans lequel le moyen de fixation comprend un filetage sur lequel se positionne un filetage correspondant du moyen de serrage.

12. Système selon l'une quelconque des revendications précédentes, dans lequel le moyen de serrage 4 est agencé de manière à fournir de manière détachable une force axiale sur le capuchon.
